# EUROPÄISCHE PATENTSCHRIFT

(11) **EP 1 771 748 B1**
(45) Veröffentlichungstag und Bekanntmachung des Hinweises auf die Patenterteilung: **06.05.2009**
(21) Anmeldenummer: 05769909.2
(22) Anmeldetag: 20.07.2005
(51) Int. Cl.: G01S 13/74, B60R 21/00

(54) **VERFAHREN UND VORRICHTUNG ZUR LOKALISIERUNG EINER ALS ID-GEBER, INSBESONDERE FAHRZEUGSCHLÜSSEL, AUSGEBILDETEN MOBILEN SENDEEINRICHTUNG**
METHOD AND APPARATUS FOR LOCATING A MOBILE TRANSMITTER EMBODIED AS AN IDENTIFICATION DEVICE, ESPECIALLY A VEHICLE KEY
PROCEDE ET DISPOSITIF DE LOCALISATION D'UN DISPOSITIF EMETTEUR MOBILE REALISE SE PRESENTANT SOUS LA FORME D'UN EMETTEUR ID, NOTAMMENT D'UNE CLE DE VEHICULE

(30) Priorität: 26.07.2004 DE 102004036258
(43) Veröffentlichungstag der Anmeldung: 11.04.2007
(73) Patentinhaber: Continental Automotive GmbH, 30165 Hannover (DE)
(72) Erfinder: HERMANN, Stefan, 93096 Köfering (DE)
(86) Internationale Anmeldenummer: PCT/EP2005/053523
(87) Internationale Veröffentlichungsnummer: WO 2006/015937

(56) Entgegenhaltungen:
- EP-A- 0 523 602
- EP-A- 1 081 316
- DE-A1- 10 249 866

## Beschreibung

Die Erfindung betrifft ein Verfahren sowie eine Vorrichtung zur Lokalisierung einer als ID-Geber, insbesondere Fahrzeugschlüssel, ausgebildeten mobilen Sendeeinrichtung bezüglich einer als Basisstation ausgebildete Empfangseinrichtung.

Derartige Verfahren und Vorrichtungen finden Anwendung beispielsweise in der Fahrzeugtechnik, insbesondere in Systemen zur Überprüfung der Zugangsberechtigung, Anwendung, um einen als ID-Geber ausgebildeten Fahrzeugschlüssel als berechtigten Schlüssel zu erkennen. Beispielsweise kann hierdurch ein funkbasiertes Zugangskontroll- bzw. Schließ- und Startsystem realisiert werden, so dass der Zugang und die Benutzung (Wegfahrsperre) nur bei Nachweis einer Berechtigung ermöglicht wird.

Herkömmliche Zugangskontrollsysteme bestehen aus einem elektronischen Schlüssel, einem sogenannten ID-Geber, der von einer Bedienperson mitgeführt wird und einer Sende- und Empfangsstation bzw. Basisstation im Fahrzeug, die eine Annäherung eines ID-Gebers detektiert und daraufhin mit diesem kommuniziert.

Bisher sind verschiedene Übertragungsarten üblich, wie beispielsweise Niederfrequenzsysteme im Frequenzbereich von 125 kHz oder auch Hochfrequenzsysteme im Frequenzbereich von 433 MHz oder 868 MHz.

In der jüngsten Zeit entstand die Forderung nach höherer Reichweite bei geringerem Ruhestrombedarf. In der DE 199 57 536 A1 ist beispielsweise hierfür ein Diebstahlschutzsystem für ein Kraftfahrzeug vorgeschlagen, welches im Mikrowellen- bzw. GHz-Frequenzbereich arbeitet.

Allerdings ergeben sich aus der zu niederfrequenten Systemen vergleichsweise großen Reichweite Probleme bei der Zuordnung des ID-Gebers zu Außen- oder Innenraum des Fahrzeuges.

Aus der EP 0 523 602 A1 ist ein Verfahren zum Erkennen eines im Fahrzeuginneren eingeschlossenen tragbaren Transponders bekannt. Hierzu wird vorgeschlagen über einen Frage-Antwort-Dialog festzustellen, ob sich der Transponder innerhalb oder außerhalb des Fahrzeugs befindet. Die eigentliche Verriegelung des Fahrzeugs ist schließlich von der Position des Transponders abhängig.

In der DE 199 57 536 A1 ist zur Bestimmung der Position des ID-Gebers beispielsweise vorgeschlagen, durch kontinuierliche Auswertung mehrerer aufeinanderfolgender Messungen Entfernungsänderungen zu bestimmen.

Aus den Entfernungswerten und den zugehörigen Entfernungsänderungen kann dann über eine Triangulationsberechnung die genaue Position des ID-Gebers bestimmt werden. Nachteiligerweise ist eine Positionsbestimmung des LD-Gebers zur Überwachung und Unterscheidung des Innen- und Außenraums aufwändig.

Zudem sind Mehrwegeausbreitungen eines höherfrequenten Schlüsselsignals problematisch, da hier eine eindeutige Lokalisierung unter Ermittlung auf welcher Seite des Fahrzeuges sich der Schlüssel befindet sowie Messung der Entfernung des Schlüssels vom Fahrzeug erschwert oder gar verhindert wird.

Aus der DE 102 49 866 A1 ist ein Verfahren zur Lokalisierung einer als ID-Geber ausgebildeten mobilen Sendeeinrichtung bezüglich einer als Basisstation ausgebildeten Empfangseinrichtung und zur Erkennung von Mehrwegausbreitungen eines vom ID-Geber gesendeten Signals beschrieben. Die Unterscheidung zwischen den Einweg- und Mehrwegausbreitungen wird dabei durch Frequenzmodulation des Signals, Bandpassfilterung und Auswertung der Spektrallinien des Rücksignals getroffen.

Das Dokument EP 1 081 316 A1 offenbart eine Vorrichtung und ein Verfahren zur Lokalisierung einer als ID-Geber ausgebildeten mobilen Sendeeinrichtung bezüglich einer als Basisstation ausgebildeten Empfangseinrichtung
wobei
in der Basisstation mittels zweier Antennen Signale des ID-Gebers als Empfangssignale detektiert werden, und wobei
die Feldstärken der Empfangsignale in Abhängigkeit der jeweiligen Empfangsbereiche detektiert werden.

Der Erfindung liegt daher die Aufgabe zugrunde, ein Verfahren und eine Vorrichtung zur Lokalisierung einer als ID-Geber, insbesondere Fahrzeugschlüssel, ausgebildeten mobilen Sendeeinrichtung zu schaffen, welche eine eindeutige Lokalisierung des ID-Gebers bezüglich einer Basisstation auch bei Mehrwegeausbreitungen ermöglichen.

Diese Aufgabe wird erfindungsgemäß durch ein Verfahren mit den Merkmalen des Anspruchs 1, sowie durch eine Vorrichtung zur Durchführung eines solchen Verfahrens mit den Merkmalen des Anspruchs 7 gelöst.

Durch das Detektieren bzw. das Empfangen von Einweg- und Mehrwegeausbreitungen des gesendeten Signals mittels wenigstens zwei unterschiedlich ausgerichteter Empfangsbereiche, sowie das der Feldstärken der Empfangsignale in Abhängigkeit der jeweiligen Empfangsantenne ist es vorteilhafterweise möglich selbst bei auftretenden Mehrwegeausbreitungen die Richtung des ID-Gebers zu bestimmen. Hierbei wird das Empfangssignal mit der größten Feldstärke sowie die der jeweiligen Empfangsantenne zugeordnete Empfangsrichtung ermittelt und als Richtung des ID-Gebers lokalisiert.

In weiterer Ausgestaltung der Erfindung wird das Ergebnis bzw. die Lokalisierung des ID-Gebers als ungültig angesehen, sobald eine vorbestimmte Anzahl, beispielsweise zwei oder drei Mehrwegeausbreitungen des Signals detektiert werden. Hierdurch kann vorteilhafterweise vermieden werden, dass mehrere Signale gleicher Frequenz aufgrund von Interferenzen, Überlagerungen, Auslöschungen etc. eine fehlerhafte Aussage bezüglich der Lokalisierung des ID-Gebers verursachen.

Ebenso ist möglich - zusätzlich oder als einziges Kriterium für die Qualität des Ergebnisses - die Lokalisierung des ID-Gebers als ungültig anzusehen, sobald ein vorbestimmter Feldstärkenwert des Empfangssignals einer detektierten Mehrwegeausbreitung überschritten wird. Hierdurch ist es vorteilhafterweise möglich, Mehrwegeausbreitungen unterhalb eines vorbestimmten Feldstärkenwertes (Schwellwert) als solche zu erkennen, ohne dass die fehlerfreie Lokalisierung des ID-Gebers hierunter leidet. Erst wenn die Störsignale (Mehrwegeausbreitungen) einen bestimmten Schwellwert übersteigen, besteht die Gefahr, dass eine eindeutige Lokalisierung des ID-Gebers erschwert oder gar unmöglich wird und das Ergebnis mit einem Fehler behaftet ist.

In bevorzugter Ausgestaltung der Erfindung werden die Einweg- und Mehrwegeausbreitungen des gesendeten Signals mittels wenigstens vier unterschiedlich ausgerichteter Empfangsbereiche detektiert. Hierdurch wird die Aussage über die Richtung vorteilhafterweise verfeinert, wobei beispielsweise in Richtungen links, recht vorne und hinten unterschieden werden kann. Bei überlappenden Bereichen können sogar zusätzlich Zwischenrichtungen wie vorne rechts, hinten rechts, vorne links, hinten links erkannt werden.

In weiterer Ausgestaltung der Erfindung wird ein Empfangssignal erst ab einem vorbestimmten Schwellwert der Feldstärke als Einwegausbreitung erkannt. Hierdurch können als einziges oder zusätzliches Kriterium für die Qualität des Ergebnisses relativ starke Mehrwegeausbreitungen und andere Störungen ignoriert werden und damit fehlerhafte Lokalisierungen des ID-Gebers vermieden werden.

Selbstverständlich ist es wünschenswert, dass für eine erfolgreiche Lokalisierung der ID-Geber solange sendet, bis das gewünschte Ergebnis (korrekte Lokalisierung) erfolgt ist. Dies wird üblicherweise bereits bei bekannten Verfahren durch eine bidirektionale Kommunikation mit Anfrage und Bestätigung ermöglicht.

Um unterschiedlich ausgerichtete Empfangsbereiche zu erzeugen, weist die Basisstation nach der Erfindung eine zusammengesetzte Empfangsantenne, insbesondere Vivaldiantenne auf, welche beispielsweise zentral im Fahrzeughimmel angeordnet ist. Hierbei kann die Antenne mit der Basisstation eine bauliche Einheit bilden oder örtlich von der Basisstation getrennt und elektrisch mit ihr verbunden sein. Um die empfangenen Signale in Abhängigkeit der Empfangsbereiche und der Feldstärke auszuwerten und Mehrwegeausbreitungen zu erkennen, weist die Basisstation weiterhin eine Auswerteeinrichtung auf. Alternativ oder zusätzlich können als Antenne auch örtlich getrennte Antennen, insbesondere magnetische Loop Antennen, mit unterschiedlich ausgerichteten Empfangsbereichen bzw. Empfangskegeln verwendet werden.

In bevorzugter Ausgestaltung der Erfindung sind die Antennen derart angeordnet, dass ihre Empfangsbereiche durch einen Innenraum eines zu überwachenden Objektes hindurch, insbesondere durch einen Fahrzeuginnenraum, nach außen ragen. Hierdurch kann vorteilhafterweise ein Innenraum eines Objekts, insbesondere eines Fahrzeuges, überlappend abgedeckt werden, so dass eine Einwegausbreitung eines Signals eines ID-Gebers, welcher sich beispielsweise im Innenraum befindet, von mehreren durch den Innenraum ausgerichteten Antennen direkt empfangen werden kann. Auf diesem Wege lässt sich eine eindeutige, exaktere Lokalisierung des ID-Gebers, nämlich im Innenraum befindlich, vornehmen. Im Falle von örtlich entfernten Einzelantennen können diese beispielsweise an einer Innenseite einer Säule eines Fahrzeuges (A-, B- oder C-Säule) und/oder in der Fahrzeugkonsole und Heckablage angeordnet und mit ihrem Empfangsbereich bzw. -kegel nach innen gerichtet sein.

Die Erfindung wird nachfolgend anhand der in der Zeichnung dargestellten Ausführungsbeispiele näher erläutert.

In der Zeichnung zeigen:
- Fig. 1: eine schematische Ansicht einer zusammengesetzten Antenne mit unterschiedlich ausgerichteten Empfangsbereichen;
- Fig. 2: eine schematische Detailansicht einer an einer Fahrzeugkarosserie angeordneten magnetischen Loop Antenne und
- Fig. 3: eine schematische Ansicht unterschiedlich ausgerichteter Empfangsbereiche einer erfindungsgemäßen Vorrichtung in einem Fahrzeug.

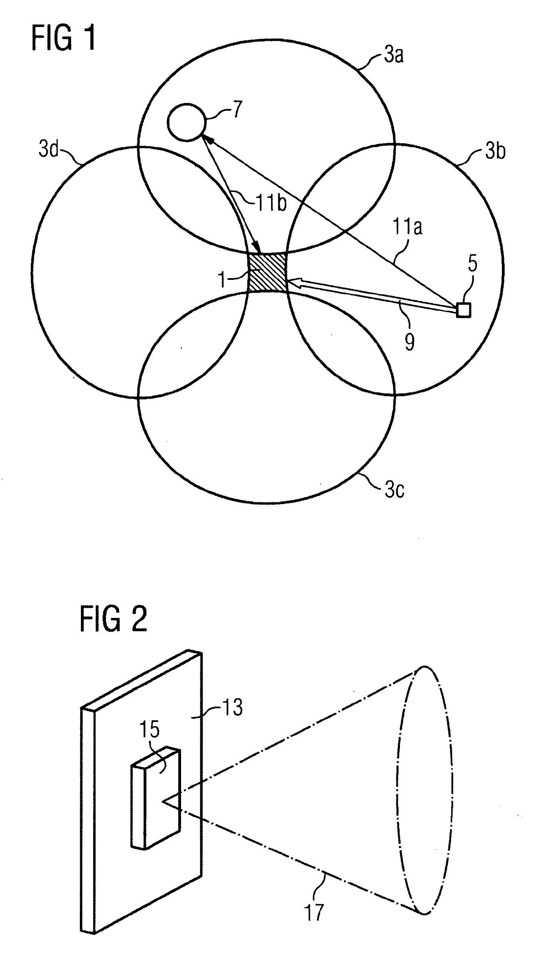

Fig. 1 zeigt in schematischer Ansicht eine zusammengesetzte Antenne 1, insbesondere Vivaldiantenne, von welcher sich unterschiedlich ausgerichtete Empfangsbereiche 3a, 3b, 3c und 3d üblicherweise in Form von Kegeln ausbreiten. Diese Kegel breiten sich auch aus der Zeichenebene heraus aus (schräg bis senkrecht), so dass in der Darstellung die Bereiche 3a bis 3d als gerader oder schräger Kegelschnitt der üblicherweise keulenförmigen Empfangsbereiche zu verstehen sind.

Eine derartige Antenne 1 kann sich beispielsweise in einem Fahrzeug an der Unterseite des Fahrzeughimmels mittig bzw. zentral befinden, so dass ihre Kegel nach außen gerichtet sind, wobei diese Kegel jeweils eine Richtung schräg nach unten haben können. Die Ansicht nach Fig. 1 kann daher als Draufsicht auf ein Fahrzeug mit einer solchen Antenne 1 angesehen werden, so dass der Empfangsbereich 3b die rechte Fahrzeugseite, der Empfangsbereich 3a die vordere Seite des Fahrzeuges, der Bereich 3c die hintere Seite des Fahrzeuges und der Bereich 3d die linke Seite des Fahrzeuges, welches in der Zeichnung nicht näher dargestellt ist, abdecken.

Befindet sich nun ein ID-Geber bzw. Schlüssel 5 in einem der Empfangsbereiche der Antenne 1, wie beispielsweise dem Empfangsbereich 3b, so empfängt die Antenne 1 über diesen Empfangsbereich eine Einwegausbreitung 9 des Sendesignals des Schlüssels 5 auf direktem Wege. Da sich das Sendesignal des Schlüssels 5 auch in andere Richtungen ausbreitet, kann es jedoch, wie in Fig. 1 dargestellt, vorkommen, dass sich eine Mehrwegausbreitung des Sendesignals des Schlüssels 5 über ein ebenfalls in einem Empfangsbereich befindliches reflektierendes Objekt 7 erfolgt. Als reflektierendes Objekt 7 können hierbei Wände, andere Fahrzeuge etc. infrage kommen.

Bei einer solchen Mehrwegeausbreitung erfolgt dann der Signalweg nicht mehr, wie bei einer Einwegausbreitung, direkt von Schlüssel 5 zur Antenne 1 sondern über einen Umweg, nämlich über eine Ausbreitung 11a des Signals zu dem reflektierenden Objekt 7 und von diesem über eine Ausbreitung 11b zur Antenne 1.

Da erfindungsgemäß unterschiedlich ausgerichtete Empfangsbereiche existieren, kann hierbei detektiert werden, dass ein und dasselbe Sendesignal eines Schlüssels 5 aus unterschiedlichen Richtungen zur Antenne 1 gelangt. Die Identität des Sendesignals kann hierbei beispielsweise bereits durch die Tatsache "gleiche Sendefrequenz" festgestellt werden, ohne dass weitere Analysen (Kennung, Signalauswertung, Laufzeit, etc.) erfolgen müssen.

Wie in Fig. 1 dargestellt, wird hierbei beispielsweise ein Sendesignal 9 des Schlüssels 5 über den rechten Empfangsbereich 3d sowie ein weiteres Sendesignal 11b über den Empfangsbereich 3a, also die Vorderseite des Fahrzeuges detektiert.

Demzufolge ist bereits zu diesem Zeitpunkt bekannt, dass zumindest eine Mehrwegausbreitung des Sendesignals des Schlüssels 5 erfolgt.

Da normalerweise die Feldstärke eines direkt empfangenen Signals (Einwegausbreitung) des Schlüssels 5 infolge des kürzeren Weges einen höheren Wert aufweist, als die Feldstärke eines über eine Mehrwegausbreitung empfangenen Sendesignals des Schlüssels 5, kann in diesem Beispiel mittels des erfindungsgemäßen Verfahrens der Schlüssel 5 auf der rechten Fahrzeugseite, nämlich innerhalb des Empfangsbereiches 3b, lokalisiert werden.

Eine Mehrwegeausbreitung 11a, 11b, wie in Fig. 1 dargestellt, kann hierbei beispielsweise über die geringere Feldstärke des Signals 11b unberücksichtigt bleiben.

Nach einer solchen Lokalisierung des Schlüssels 5 können dann in Abhängigkeit von einer solchen erfolgreichen Lokalisierung weitere Auswertungen, wie beispielsweise Entfernung des Schlüssels 5 über bekannte Verfahren, wie Laufzeitmessung des Signals etc., ermittelt werden. In Abhängigkeit von der Lokalisierung und/oder weiteren Auswertungen können dann Aktionen, wie beispielsweise Entriegeln des Kraftfahrzeuges, Freigabe der Wegfahrsperre etc. gesteuert werden.

Statt oder zusätzlich zu einer im zu überwachenden Objekt, insbesondere Fahrzeug, angeordneten, zusammengesetzten Antenne 1 nach Fig. 1 können auch Einzelantennen, insbesondere magnetische Loop Antennen im Fahrzeug angeordnet sein. Wie in Fig. 2 dargestellt, befindet sich in bevorzugter Ausgestaltung der Erfindung eine solche Loop Antenne 15 an der Innenseite der Fahrzeugkarosserie, wie beispielsweise Fahrzeugsäulen (A, B oder C-Säule), im Fahrzeughimmel, der Fahrzeugkonsole oder dem Fahrzeugheck, insbesondere der Hutablage.

Die Antenne 15 ist hierbei beispielsweise an der linken B-Säule an der Fahrzeuginnenseite derart angeordnet, dass ihr kegelförmiger Empfangsbereich 17 durch das Fahrzeuginnere hindurchragt und den rechten Fahrzeugraum abdeckt. Ebenso kann eine an der Innenseite der rechten Fahrzeugsäule angeordnete Antenne durch den Fahrzeuginnenraum hindurchragen und die linke Fahrzeugseite abdecken. Der vordere und hintere Bereich des Fahrzeuges kann dann beispielsweise durch eine zusammengesetzte Antenne 1, wie in Fig. 1 dargestellt, abgedeckt werden oder durch entsprechende, ebenfalls jeweils durch den Innenraum hindurchragende Empfangskegel von in der Fahrzeugkonsole und im Fahrzeugheck (vorzugsweise mittig) angeordneten weiteren Einzelantennen abgedeckt werden.

Ab einer bestimmten Frequenz des Signals des Schlüssels 5, insbesondere dem UHF-Bereich wirken die Fahrzeugsäulen üblicherweise nicht als Reflektor, so dass hierüber keine Mehrwegausbreitungen eines Sendesignals des Schlüssels 5 erfolgen kann.

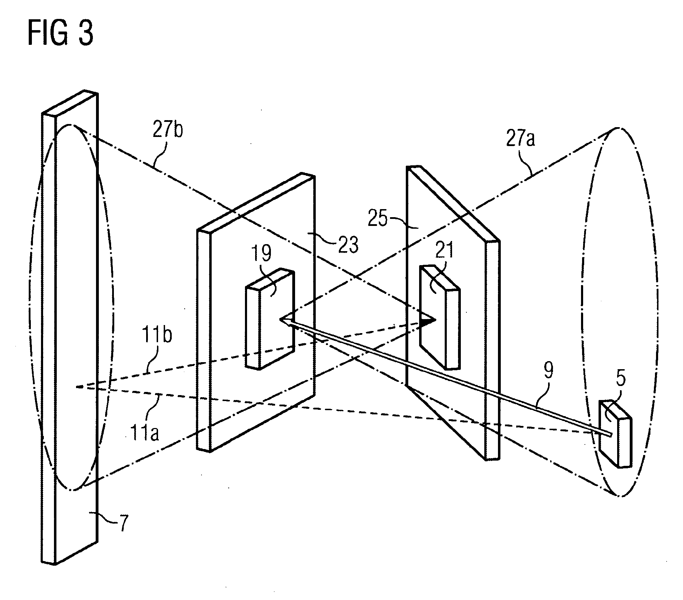

In Fig. 3 ist schematisch beispielhaft beschrieben, wie erfindungsgemäß ein Schlüssel 5 mittels zweier örtlich entfernter Antennen 19 und 21, insbesondere magnetische Loop-Antennen, mit unterschiedlich ausgerichteten kegelförmigen Empfangsbereichen 27a und 27b lokalisiert werden kann. Der Schlüssel 5 befindet sich - wie dargestellt - in einem Empfangsbereich 27a der Antenne 19, welche beispielsweise an der Innenseite der linken B-Säule 23 eines Fahrzeuges angeordnet ist. Wie aus Fig. 3 ersichtlich, ist gegenüber liegend, also im Beispielfall an der Innenseite der rechten B-Säule 25 eines Fahrzeuges, eine weitere Antenne 21 angeordnet, deren Empfangskegel 27b, ebenso wie der Empfangskegel 27a der Antenne 19, durch den Innenraum des Fahrzeugs hindurchragt und statt wie der Empfangsbereich 27a die rechte Fahrzeugseite die gegenüber liegende linke Fahrzeugseite abdeckt.

Befindet sich nun, wie in Fig. 3 dargestellt, der Schlüssel 5 auf der rechten Fahrzeugseite außerhalb des Fahrzeuges, so wird sein direkt gesendetes Einweg-ausgebreitetes Signal 9 nur von der Antenne 19 empfangen. Befindet sich innerhalb des Empfangsbereiches 27b ein Reflektor 7, beispielsweise eine Hauswand etc., so kann es vorkommen, dass ein vom Schlüssel 5 zum Reflektor 7 gelangendes Signal 11a an diesem reflektiert wird und als Signal 11b von der Antenne 21 empfangen wird.

Da dieses Signal 11b eine geringere Feldstärke als das Signal 9 aufweist, kann dieses Signal als Mehrwegeausbreitung erkannt werden, so dass der Schlüssel eindeutig über sein stärkeres Signal 9 auf der rechten Fahrzeugseite lokalisiert werden kann. Sofern sich die Antennen 19 und 21 jeweils an den Innenseiten gegenüber liegender Fahrzeugsäulen befinden, ist die Darstellung nach Fig. 3 selbstverständlich so zu interpretieren, dass die Fahrzeugsäulen 23 und 25 zueinander parallel liegen. Dementsprechend liegen die Empfangsbereiche spiegelsymmetrisch zur Fahrzeuglängsachse direkt gegenüber liegend in Richtung linker bzw. rechter Fahrzeugseite.

Befindet sich der Schlüssel 5 dagegen im Fahrzeuginnenraum, werden dessen Sendesignale von beiden Antennen 19, 21 in etwa gleichstark empfangen, so dass (in diesem Fall) zwei Einwegausbreitungen des Sendesignals des Schlüssels detektiert werden. In diesem Fall ist auf einfache Art eine Lokalisierung des Schlüssels 5, nämlich "im Fahrzeuginnenraum befindlich", möglich.

Das erfindungsgemäße Verfahren wird vorzugsweise ab einer Frequenz von mehreren MHz bis beispielsweise mehrere GHz angewandt, da erst ab den VHF- und insbesondere UHF- und Mikrowellen-Bereich in näherer Umgebung von wenigen Metern, beispielsweise bis 5, 10 oder 15 Meter, Laufzeitmessungen aufgrund der höheren Dämpfung leichter werden können.

Um die Sicherheit gegen unbefugten Zugang zu erhöhen, können mehrere Prüfungen einzeln oder in beliebiger Kombination vorgesehen sein. Beispielsweise kann ein vordefinierter Schwellwert für die Feldstärke vorgegeben sein, ab dem erst ein Sendesignal als Einwegausbreitung erkannt wird. Weiterhin ist ein vordefinierter Mindestschwellwert für die Signalfeldstärke möglich, ab dem überhaupt Signale empfangen werden, so dass Signale mit geringerer Feldstärke von vornherein als Störung bzw. als nicht relevant betrachtet werden. Zudem ist es denkbar bei Detektieren von einer vordefinierten Anzahl von Mehrwegeausbreitung, also beispielsweise bereits bei einem zusätzlichen (mehrwegeausgebreiteten) Signal, das Ergebnis der Lokalisierung zu verwerfen und auf ein erneut gesendetes Signal zu warten.

Selbstverständlich ist die Erfindung nicht auf das beschriebene Ausführungsbeispiel beschränkt, sondern in beliebigen Objekten (Haustür, Garagentür, Gebäudeeingänge, Sicherheitszonen in Gebäuden etc.) anwendbar, die eine Überwachung einer Zugangsberechtigung erfordern.

## Patentansprüche

1. Verfahren zur Lokalisierung einer als ID-Geber (5) ausgebildeten mobilen Sendeeinrichtung bezüglich einer als Basisstation ausgebildeten Empfangseinrichtung (1, 15, 19, 21) und zur Erkennung von Mehrwegeausbreitungen (11b) eines vom ID-Geber (5) gesendeten Signals (11b), wobei
in der Basisstation mittels wenigstens zweier unterschiedlich ausgerichteter Empfangsbereiche (3a-3d, 27a, 27b), Einweg- und Mehrwegeausbreitungen des gesendeten Signals (11a, 9) als Empfangssignale (9, 11b) derart detektiert werden, und wobei
die Feldstärken der Empfangsignale (9, 11b) in Abhängigkeit der jeweiligen Empfangsbereiche (3a-3d, 27a, 27b) detektiert werden und wobei
dass das Empfangssignal (9) mit der größten Feldstärke und dem zugeordneten Empfangsbereich (3a-3d, 27a, 27b) der Empfangseinrichtung (1, 15, 19, 21) sowie die der jeweiligen Empfangsantenne zugeordnete Empfangsrichtung ermittelt und als Richtung des ID-Gebers (5) lokalisiert wird.

2. Verfahren nach Anspruch 1, **dadurch gekennzeichnet, dass** ab einer vorbestimmten Anzahl von detektierten Mehrwegeausbreitungen (11a) des Signals die Lokalisierung des ID-Gebers (5) als ungültig angesehen wird.

3. Verfahren nach Anspruch 1 oder 2, **dadurch gekennzeichnet, dass** ab einem vorbestimmten Feldstärkenwert des Empfangssignals (11b) einer detektierten Mehrwegeausbreitung die Lokalisierung des ID-Gebers (5) als ungültig angesehen wird.

4. Verfahren nach einem der vorhergehenden Ansprüche, **dadurch gekennzeichnet, dass** die Einweg- und Mehrwegeausbreitungen des gesendeten Signals (9, 11b) mittels wenigstens vier unterschiedlich ausgerichteter Empfangsbereiche (3a-3d, 27a, 27b) detektiert werden.

5. Verfahren nach einem der vorhergehenden Ansprüche, **dadurch gekennzeichnet, dass** ein Empfangssignal (9) erst ab einem vorbestimmten Schwellwert der Feldstärke als Einwegausbreitung erkannt wird.

6. Verfahren nach einem der vorherigen Ansprüche, **dadurch gekennzeichnet, dass** der ID-Geber (5) als Fahrzeugschlüssel ausgebildet ist.

7. Vorrichtung zur Durchführung eines Verfahrens nach einem der vorhergehenden Ansprüche, wobei
in der Basisstation mittels wenigstens zweier unterschiedlich ausgerichteter Empfangsbereiche (3a-3d, 27a, 27b), Einweg- und Mehrwegeausbreitungen des gesendeten Signals (11a, 9) als Empfangssignale (9, 11b) derart detektiert werden, und wobei
die Feldstärken der Empfangsignale (9, 11b) in Abhängigkeit der jeweiligen Empfangsbereiche (3a-3d, 27a, 27b) detektiert werden und wobei
dass das Empfangssignal (9) mit der größten Feldstärke und dem zugeordneten Empfangsbereich (3a-3d, 27a, 27b) der Empfangseinrichtung (1, 15, 19, 21) sowie die der jeweiligen Empfangsantenne zugeordnete Empfangsrichtung ermittelt und als Richtung des ID-Gebers (5) lokalisiert wird.

8. Vorrichtung nach Anspruch 7, **dadurch gekennzeichnet, dass** die Empfangseinrichtung wenigstens zwei örtlich voneinander getrennte Antennen aufweist.

9. Vorrichtung nach Anspruch 7, **dadurch gekennzeichnet, dass** die Empfangsantenne (1) als Vivaldiantenne ausgebildet ist.

10. Vorrichtung nach Anspruch 8, **dadurch gekennzeichnet, dass** die Antennen derart angeordnet sind, dass ihre Empfangsbereiche (3a - 3d) durch einen Innenraum eines zu überwachenden Objektes hindurch nach außen ragen.

11. Vorrichtung nach Anspruch 9, **dadurch gekennzeichnet**, der Innenraum als Fahrzeuginnenraum ausgebildet ist.

## Claims

1. Method for localising a mobile transmitter embodied as an identification device (5) relative to a receiver (1, 15, 19, 21) configured as a base station and for recognising multipath propagations (11b) of a signal (11b) sent by the identification device (5), with
single-path and multipath propagations of the sent signal (11a, 9) being detected as receive signals (9, 11b) in the base station by means of at least two differently oriented reception areas (3a-3d, 27a, 27b) and with
the field intensities of the receive signals (9, 11b) being detected in accordance with the respective reception areas (3a-3d, 27a, 27b) and with
the receive signal (9) having the greatest field intensity and the associated reception area (3a-3d, 27a, 27b) of the receiver (1, 15, 19, 21) as well as the receiver associated with the respective receive antenna being ascertained and localised as the direction of the identification device (5).

2. Method according to claim 1, **characterised in that** as of a predetermined number of detected multipath propagations (11a) of the signal the localisation of the identification device (5) is regarded as invalid.

3. Method according to claim 1 or 2, **characterised in that** as of a predetermined field intensity value of the receive signal (11b) of a detected multipath propagation the localisation of the identification device (5) is regarded as invalid.

4. Method according to one of the preceding claims, **characterised in that** the single-path and multipath propagations of the sent signal (9, 11b) are detected by means of at least four differently oriented reception areas (3a-3d, 27a, 27b).

5. Method according to one of the preceding claims, **characterised in that** a receive signal (9) is not recognised as a single-path propagation until a predetermined threshold value for the field intensity is reached.

6. Method according to one of the preceding claims, **characterised in that** the identification device (5) is embodied as a vehicle key.

7. Apparatus for implementing a method according to one of the preceding claims, with
single-path and multipath propagations of the sent signal (11a, 9) being detected as receive signals (9, 11b) in the base station by means of at least two differently oriented reception areas (3a-3d, 27a, 27b) and with
the field intensities of the receive signals (9, 11b) being detected in accordance with the respective reception areas (3a-3d, 27a, 27b) and with
the receive signal (9) having the greatest field intensity and the associated reception area (3a-3d, 27a, 27b) of the receiver (1, 15, 19, 21) as well as the receiver associated with the respective receive antenna being ascertained and localised as the direction of the identification device (5).

8. Apparatus according to claim 7, **characterised in that** the receive antenna has at least two locally separate antennas.

9. Apparatus according to claim 7, **characterised in that** the receive antenna (1) is embodied as a Vivaldi antenna.

10. Apparatus according to claim 8, **characterised in that** the antennas are arranged such that their reception areas (3a - 3d) project through an inner area of an object to be monitored.

11. Apparatus according to claim 9, **characterised in that** the interior is embodied as a vehicle interior.

## Revendications

1. Procédé de localisation d'un dispositif d'émission mobile réalisé sous la forme d'un émetteur ID (5), par rapport à un dispositif de réception (1, 15, 19, 21) réalisé sous la forme d'une station de base, et de détection de propagations à plusieurs voies (11b) d'un signal (11b) émis par l'émetteur ID (5), procédé
au cours duquel au moyen d'au moins deux lobes de réception (3a-3d, 27a, 27b) orientés différemment, on détecte dans la station de base en tant que signal reçu (9, 11b) des propagations à une voie et des propagations à plusieurs voies du signal émis (11a, 9),
au cours duquel on détecte les intensités de champ des signaux reçus (9, 11b) en fonction des lobes de réception respectifs (3a-3d, 27a, 27b),
et au cours duquel on détermine le signal reçu (9) ayant l'intensité de champ la plus élevée et le lobe de réception associé (3a-3d, 27a, 27b) du dispositif de réception (1, 15, 19, 21) ainsi que la direction de réception associée à l'antenne de réception respective et on les localise en tant que direction de l'émetteur ID (5).

2. Procédé selon la revendication 1, **caractérisé en ce qu'**à partir d'un nombre prédéterminé de propagations à plusieurs voies détectées (11a) du signal, on considère non valide la localisation de l'émetteur ID (5).

3. Procédé selon la revendication 1 ou la revendication 2, **caractérisé en ce qu'**à partir d'une valeur prédéterminée de l'intensité de champ du signal reçu (11b) d'une propagation détectée à plusieurs voies, on considère non valide la localisation de l'émetteur ID (5).

4. Procédé selon l'une des revendications précédentes, **caractérisé en ce qu'**on détecte les propagations à une voie et à plusieurs voies du signal émis (9, 11b) au moyen d'au moins quatre lobes de réception (3a-3d, 27a, 27b) orientés différemment.

5. Procédé selon l'une des revendications précédentes, **caractérisé en ce qu'**on assimile un signal reçu (9) à une propagation à une seule voie seulement à partir d'une valeur de seuil prédéterminée de l'intensité de champ.

6. Procédé selon l'une des revendications précédentes, **caractérisé en ce que** l'émetteur ID (5) est réalisé sous la forme d'une clé de véhicule automobile.

7. Dispositif pour la mise oeuvre d'un procédé selon l'une des revendications précédentes,
dans lequel au moyen d'au moins deux lobes de réception (3a-3d, 27a, 27b) orientés différemment, on détecte dans la station de base en tant que signal reçu (9, 11b) des propagations à une voie et des propagations à plusieurs voies du signal émis (11a, 9),
dans lequel on détecte les intensités de champ des signaux reçus (9, 11b) en fonction des lobes de réception respectifs (3a-3d, 27a, 27b),
et dans lequel on détermine le signal reçu (9) ayant l'intensité de champ la plus élevée et le domaine de réception associé (3a-3d, 27a, 27b) du dispositif de réception (1, 15, 19, 21) ainsi que la direction de réception associée à l'antenne de réception respective et on les localise en tant que direction de l'émetteur ID (5).

8. Dispositif selon la revendication 7, **caractérisé en ce que** le dispositif de réception comprend au moins deux antennes distinctes spatialement séparées l'une de l'autre.

9. Dispositif selon la revendication 7, **caractérisé en ce que** l'antenne de réception (1) est réalisée sous la forme d'une antenne Vivaldi.

10. Dispositif selon la revendication 8, **caractérisé en ce que** les antennes sont disposées de telle façon que leurs lobes de réception (3a-3d) traversent un espace intérieur d'un objet à surveiller tout en s'étendant hors de cet espace.

11. Dispositif selon la revendication 9, **caractérisé en ce que** l'espace intérieur se présente sous la forme d'un habitacle de véhicule automobile.
